# FASCICULE DE BREVET EUROPEEN

(11) **EP 1 792 763 B1**
(45) Date de publication et mention de la délivrance du brevet: **20.08.2008**
(21) Numéro de dépôt: 06300964.1
(22) Date de dépôt: 20.09.2006
(51) Int. Cl.: B60J 3/02, B60J 1/20

(54) **Dispositif pare-soleil déroulant pour véhicule automobile**
Ausrollbare Sonnenschutzvorrichtung für Fahrzeuge
Roller sun blind for vehicles

(30) Priorité: 01.12.2005 FR 0553673
(43) Date de publication de la demande: 06.06.2007
(73) Titulaire: RENAULT S.A.S., 92100 Boulogne Billancourt (FR)
(72) Inventeur: Francisco, Paulo, 78740 ST REMY LES CHEVREUSE (FR); Laporte-Galaa, Philippe, 75014 PARIS (FR); Boussier, Marie-Pierre, 78370 PLAISIR (FR); Holleville, Francis, 78470 ST REMY LES CHEVREUSE (FR)

(56) Documents cités:
- DE-C- 841 105
- FR-A- 1 577 265
- US-A- 5 076 633
- US-A- 5 472 255
- US-A- 5 551 744
- US-A1- 2002 033 616
- PATENT ABSTRACTS OF JAPAN vol. 012, no. 448 (M-768), 24 novembre 1988 (1988-11-24) -& JP 63 180518 A (NIPPON DENSO CO LTD), 25 juillet 1988 (1988-07-25)

## Description

### Domaine de l'invention

L'invention concerne le domaine des automobiles et en particulier des pare-soleil pouvant être installés et retirés par au moins un usager ou un conducteur du véhicule.

### Art antérieur et problème posé

Il est connu d'utiliser des dispositifs pare-soleil de plusieurs types. Par exemple, un premier type consiste à mettre en oeuvre un volet monté articulé à une extrémité du toit, appelé pavillon, d'un véhicule. Le pare-soleil est mobile entre une position rabattue sur la doublure interne du pavillon et une position active de protection. Cette dernière peut être réglée manuellement à une position angulaire choisie par l'utilisateur, c'est-à-dire le conducteur ou le passager avant du véhicule, afin de supprimer, autant que possible, les effets d'éblouissement dus aux rayons du soleil.

D'autre part, par la demande de brevet FR-2 827 225, on connaît un dispositif formant pare-soleil à double filtre polarisant pour un véhicule automobile. Un tel dispositif comprend deux écrans pare-soleil, chacun en forme de plaque pouvant être déplacé indépendamment l'un de l'autre de façon guidée, entre une position active, en regard du pare-brise du véhicule et une position inactive, dans laquelle les écrans sont rangés et escamotés dans la doublure du pavillon du véhicule. Comme on peut le comprendre, la position escamotée d'un tel pare-soleil à l'intérieur d'un montant ou d'une doublure de pavillon de véhicule nécessite un dispositif assez complexe et relativement inaccessible.

D'autre part, un dispositif pare-soleil selon le préamble de la revendication 1 est connu de US 5076633.

Le but de l'invention est donc de proposer un dispositif pare-soleil qui soit petit, lorsqu'il n'est pas utilisé, c'est-à-dire rangé de quelques manières que ce soit, et de taille opérationnelle suffisante, lorsqu'on souhaite se protéger de la lumière, c'est-à-dire dans une position déployée, ceci tout en évitant les inconvénients des dispositifs existants, notamment de celui précédemment décrit.

### Résumé de l'invention

A cet effet, l'objet principal de l'invention est un dispositif pare-soleil déroulant pour véhicule automobile, apte à être enroulé et déroulé dans deux positions respectives d'utilisation et de rangement.

Selon l'invention, il comprend un pare-soleil constitué d'une succession de lattes filtrantes, rigides, mises en butée les unes contre les autres, sur la tranche de leur côtés longitudinaux constitués d'une très courte largeur, les lattes étant maintenues entre elles par des liaisons flexibles mais non extensibles placées latéralement par rapport aux tranches formant des butées, de façon à empêcher le pivotement des lattes les unes par rapport aux autres du côté opposé à celui où se trouvent les liaisons flexibles.

Dans la réalisation principale du pare-soleil selon l'invention, la longueur des liaisons flexibles est égale à la distance séparant les points de fixation, pour que, lorsque le pare-soleil est soumis à son propre poids, les liaisons flexibles se trouvant sur le dessus, le pare-soleil constitue sensiblement un plan rigide, s'incurvant à peine sous l'effet de son poids.

Dans une réalisation préférentielle de l'invention, pour chaque latte, les deux tranches sont chacune adjacentes à une première face, qui est grande, de la latte.

Dans cette réalisation préférentielle, il est très avantageux que les lattes aient une épaisseur supérieure à la largeur de la tranche, les côtés étant complétés d'une face inclinée reliant chaque tranche à une deuxième face de la latte, plus petite que la première, de manière à ce que deux lattes adjacentes forment un évidement en Vé entre elles, les points de fixation des liaisons flexibles se trouvant sur les faces inclinées.

Dans la réalisation préférentielle des lattes, ces dernières sont creuses et extrudées.

Dans la mise en oeuvre préférentielle du dispositif pare-soleil selon l'invention, on utilise une palette de commande qui est longitudinale et parallèle aux lattes.

Un système de démultiplication complète avantageusement l'utilisation d'une telle palette de commande. Il comprend de préférence une couronne dentée de grand diamètre, engrenant avec sa denture intérieure sur une roue dentée d'arbre de plus petit diamètre et solidaire d'un axe d'enroulement du pare-soleil autour duquel le pare-soleil est enroulé.

Dans la réalisation préférentielle de ces moyens de commande, on utilise avantageusement une roue dentée intermédiaire engrenant sur la roue dentée d'arbre.

### Liste des figures

L'invention et ses différentes caractéristiques techniques seront mieux comprises à la lecture de la description détaillée d'une réalisation de l'invention et qui et accompagnée de trois figures, représentant respectivement :
- figure 1, en coupe, la structure et l'agencement des lattes du pare-soleil dans le dispositif selon l'invention ;
- figure 2, en perspective, un aspect global du dispositif pare-soleil selon l'invention ;
- figure 3, le cadre d'utilisation du dispositif pare-soleil selon l'invention.

### Description détaillée d'une réalisation de l'invention

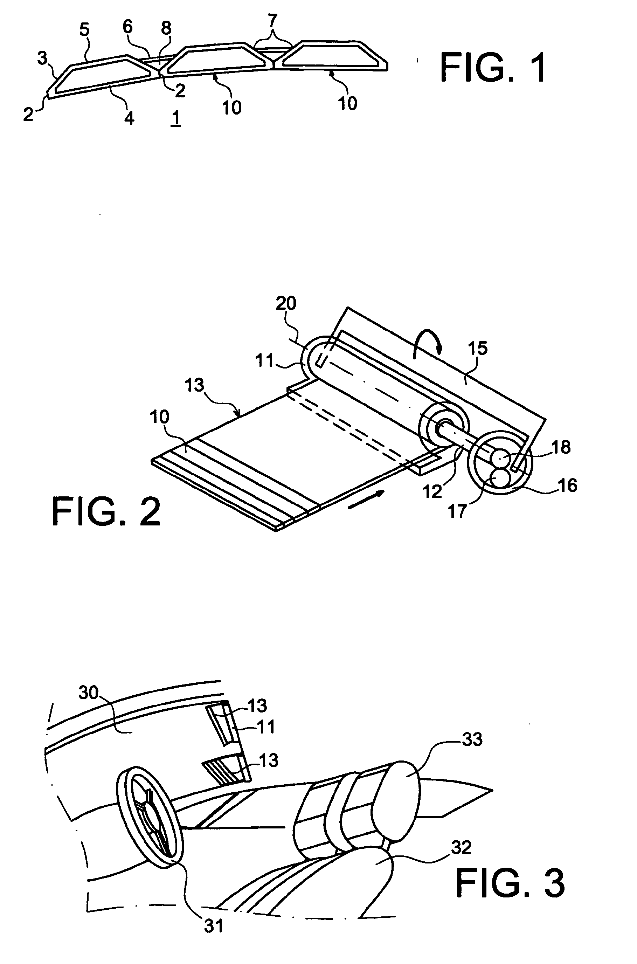

En référence à la figure 1, la structure du pare-soleil dans le dispositif selon l'invention présente une succession de lattes 10 opaques ou filtrantes, creuses, de préférence extrudées. Elles possèdent chacune une tranche 2 sur chaque côté longitudinal, ce dernier étant complété d'une surface inclinée 3. En d'autres termes, l'épaisseur de chaque latte 10 est supérieure à la largeur de chaque tranche 2.

Chaque tranche 2 est adjacente à une première face 4 qui est large, tandis que chaque surface inclinée 3 est adjacente à une deuxième face 5, qui est plus petite, de chaque latte 10. En fait, chaque latte 10 est positionnée de manière à être en butée contre deux lattes adjacentes 10 par ces deux tranches 2 d'extrémité. En d'autres termes, à l'exception des lattes disposées à l'extrémité du pare-soleil, toutes les tranches des lattes 10 sont placées les unes contre les autres, deux par deux, lorsque le pare-soleil est déployé.

Le maintien dans cette position de toutes les lattes 10 les unes par rapport aux autres se fait par l'utilisation de liaisons flexibles 6 qui possèdent chacune deux points de fixation 7 prévu chacun sur une surface inclinée 3 d'une des deux lattes 10 adjacentes. On précise que chaque liaison flexible 6 est non extensible. De plus, la longueur de chaque liaison flexible 6 est égale à la distance séparant les deux points de fixation 7 sur les surfaces inclinées 3, les lattes 10 étant toujours en butée les unes contres les autres par l'intermédiaire de leur tranche 2. Dans cette position, tel que représenté à la figure 1, l'ensemble des lattes constitue le pare-soleil déployé qui se trouve légèrement incurvé lorsque les liaisons flexibles 6 sont placées au-dessus des tranches 2. En effet, le poids de chaque latte 10 permet de mettre en tension chaque liaison flexible 6, la longueur de chaque liaison flexible 6 étant telle que les grandes faces 4 de lattes 10 constituent une grande surface. En effet, la rotation autour d'un axe placé du côté des grandes faces 4 n'est pas possible, grâce au fait que les tranches 2 sont en butée les unes contre les autres. Le pare-soleil est alors presque plan, très légèrement incurvé. On note que cette légère courbure peut correspondre préférentiellement à celle du pare-brise contre lequel il doit être déroulé. Le pare-soleil ainsi constitué est alors rigide et présente une occultation complète lui permettant d'assurer sa fonction de pare-soleil.

L'architecture du pare-soleil est telle que deux lattes adjacentes 10 forment un évidement 2 en V entre elles, les points de fixation 7 des liaisons flexibles 6 étant placés sur les faces inclinées 3.

L'évidement 8 constitué par les deux surfaces inclinées 3 de deux lattes 10 adjacentes permet au pare-soleil d'être roulé autour d'un axe se trouvant du côté des fixations flexibles 6. Les évidements 8 sont tels qu'ils permettent de présenter un rayon de courbure très important pour l'enroulement du pare-soleil ainsi constitué autour d'un axe, dès les premiers tours d'enroulement.

En référence à la figure 2, le pare-soleil 13 peut donc être enroulé autour d'un axe d'enroulement 12 monté tournant à l'intérieur du véhicule. Le pare-soleil 13 ainsi constitué d'une grande série de lattes 10 mises les unes à côté des autres est fixé à cet axe d'enroulement 12 par une première extrémité. L'axe d'enroulement 12 est monté tournant à l'intérieur d'un carter 11 qui assure la fonction de dévidoir à l'ensemble, guide et oriente le déploiement du pare-soleil 13. Ce déploiement, ainsi que le rangement du pare-soleil 13, peut être effectué manuellement ou bien de façon motorisée. L'utilisateur peut, selon différentes variations de l'invention, déployer le pare-soleil en tirant sur l'extrémité libre, ou en actionnant une motorisation par une action sur un bouton ou une palette. Sur la réalisation de la figure 2, est prévue une palette 15 actionnée par un utilisateur, c'est-à-dire un passager placé à l'intérieur du véhicule. On conçoit que l'encombrement de l'ensemble ainsi constitué, en position rangée, présente une surface d'occultation inférieure au pare-soleil classique, ce qui rend le dispositif pare-soleil selon l'invention relativement intéressant dans le cas d'une utilisation panoramique, et par exemple avec un toit en verre.

La commande manuelle est donc réalisée au moyen d'une palette 15 dont le mouvement de rotation est transmis à l'axe 12 par l'intermédiaire d'un réducteur à engrenage. Ce dernier est constitué d'une couronne dentée 16 de grand diamètre et solidaire de la palette 15, ainsi que d'une roue intermédiaire 17 et d'une roue d'arbre 18 solidaire de l'axe d'enroulement 12. La couronne dentée 16 est concentrique à l'axe d'enroulement 12 du pare-soleil 13, ce qui limite l'encombrement de l'ensemble. Cependant, une variante sans roue intermédiaire 18 et à couronne dentée 16 décalée peut permettre un mouvement de la palette 15 concordant avec celui des pare-soleil habituels, c'est-à-dire en position abaissée pour la position déroulée du pare-soleil et en position relevée pour le rangement de celui-ci.

La manoeuvre de la palette 15 entraîne la couronne dentée 16, qui entraîne elle-même la roue intermédiaire 17 à une vitesse supérieure. Cette dernière entraîne la roue d'arbre 18 et, en conséquence, l'axe d'enroulement 12 a une vitesse qui peut être encore augmentée selon le rapport du nombre de dents de chacune de ces roues. Ainsi, pour un débattement de la palette 15 inférieur à un tour, il est possible d'obtenir plusieurs tours de l'axe d'enroulement 12, par conséquent, le déploiement complet du pare-soleil 13. Par exemple, si la roue intermédiaire 17 a deux fois plus de dents que la roue d'arbre 18, l'axe d'enroulement 12 fera cinq tours pour un tour de la palette 15.

La figure 3 décrit l'installation d'un dispositif pare-soleil dans un véhicule. On peut ainsi distinguer un pare-brise 30, un volant 31, un siège avant 32 et son appui-tête 33. Le système selon l'invention est fixé, par l'intermédiaire de son carter 11, sur la partie avant du plafond, en haut du pare-brise 30. Ainsi, un ou plusieurs systèmes peuvent ainsi dérouler un pare-soleil 13 à l'intérieur de l'habitacle, contre le pare-brise 30, en déroulant celui-ci vers l'avant et vers le bas.

## Revendications

1. Dispositif pare-soleil déroulant pour véhicule automobile apte à être enroulé et déroulé dans deux positions respectives d'utilisation et de rangement, **caractérisé en ce qu'**il comprend un pare-soleil (13) constitué d'une succession de lattes (10) filtrantes ou opaques, rigides, mises en butée les unes contre les autres, par l'intermédiaire d'une tranche (2) de leurs côtés longitudinaux, chaque tranche (2) étant constituée d'une très courte largeur, les lattes (10) étant maintenues entre elles par des liaisons flexibles (6) mais non extensibles, placées latéralement par rapport aux tranches (2) qui forment ainsi des butées, de façon à empêcher le pivotement des lattes (10) les unes par rapport aux autres du côté opposé à celui où se trouvent les liaisons flexibles (6), de manière à former une surface relativement plane.

2. Dispositif pare-soleil selon la revendication 1, **caractérisé en ce que** la longueur des liaisons flexibles (6) est égale à la distance séparant leurs points de fixation (7) pour que, lorsque le pare-soleil (13) constitué des lattes (10) est soumis à son propre poids, les liaisons flexibles (6) se trouvant sur le dessus, l'ensemble des lattes (10) constituant le pare-soleil (13) constitue sensiblement un plan rigide ne s'incurvant à peine sous l'effet de son poids.

3. Dispositif pare-soleil selon la revendication 1, **caractérisé en ce que** pour chaque latte (10) les deux tranches (2) sont adjacentes à une première face (4), qui est grande, de chacune des lattes (10).

4. Dispositif pare-soleil selon la revendication 3, **caractérisé en ce que** les lattes (10) ont une épaisseur supérieure à la largeur de leur tranche (2), chaque côté de la latte (10) étant alors complété d'une face inclinée (3) reliant chaque tranche (2) à une deuxième face (5) plus petite que la première face (4) de chaque latte (10), de manière à ce que deux lattes (10) adjacentes forment un évidement (8) en V entre elles, les points de fixation (7) des liaisons flexibles (6) étant placés sur les faces inclinées (3).

5. Dispositif pare-soleil selon la revendication 1, **caractérisé en ce que** les lattes (10) sont creuses et extrudés.

6. Dispositif pare-soleil selon la revendication 1, **caractérisé en ce qu'**il comprend une palette (15) de commande, longitudinal et parallèle aux lattes (10).

7. Dispositif pare-soleil selon la revendication 6, **caractérisé en ce qu'**il comprend un système de démultiplication constitué d'une couronne dentée (16), de grand diamètre, engrenant par sa denture intérieure sur une roue dentée d'arbre (18) de plus petit diamètre solidaire d'un axe d'enroulement (12) du pare-soleil (13) autour duquel le pare-soleil (13) est enroulé.

8. Dispositif pare-soleil selon la revendication 7, **caractérisé en ce que** le système de démultiplication comprend également une roue dentée intermédiaire (17) engrenant à la fois sur la denture intérieure de la couronne (16) et sur la roue d'arbre (18).

## Claims

1. Roller sun blind device for a motor vehicle, that can be rolled up and unrolled into two positions, the position of use and the storage position, respectively, **characterized in that** it comprises a sun blind (13) consisting of a succession of filtering or opaque rigid slats (10) butted together via an edge face (2) of their longitudinal sides, each edge face (2) being of a very small width, the slats (10) being held together by flexible but non-extensile links (6) positioned laterally with respect to the edge faces (2) which thus form limit stops so as to prevent the slats (10) from pivoting relative to one another in the opposite direction to the side on which the flexible links (6) are located, so that they form a relatively flat surface.

2. Sun blind device according to Claim 1, **characterized in that** the length of the flexible links (6) is equal to the distance separating their attachment points (7) so that when the sun blind (13) made up of the slats (10) is subject to its own self weight, the flexible links (6) located on the top side, the collection of slats (10) that make up the sun blind (13) constitutes substantially a rigid plane that barely sags under the effect of its self weight.

3. Sun blind device according to Claim 1, **characterized in that**, for each slat (10), the two edge faces (2) are adjacent to a first face (4), which is a large face, of each of the slats (10).

4. Sun blind device according to Claim 3, **characterized in that** the slats (10) have a thickness greater than the width of their edge face (2), each side of the slat (10) therefore being supplemented by an inclined face (3) connecting each edge face (2) to a second face (5) not as large as the first face (4) of each slat (10) so that two adjacent slats (10) form a V-shaped recess (8) between them, the attachment points (7) of the flexible links (6) being positioned on the inclined faces (3).

5. Sun blind device according to Claim 1, **characterized in that** the slats (10) are hollow and extruded.

6. Sun blind device according to Claim 1, **characterized in that** it comprises an operating handle (15) that is longitudinal and parallel to the slats (10).

7. Sun blind device according to Claim 6, **characterized in that** it comprises a step-down system consisting of a large-diameter annulus gear (16) meshing via its internal toothset with a shaft input gear wheel (18) of smaller diameter secured to a winding shaft (12) for the sun blind (13) about which the sun blind (13) is wound.

8. Sun blind device according to Claim 7, **characterized in that** the step down system also comprises an intermediate gear wheel (17) in mesh both with the internal toothset of the annulus gear (16) and with the shaft gear (18).

## Patentansprüche

1. Ausrollbare Sonnenblendenvorrichtung für Kraftfahrzeug, die in zwei Positionen, in eine Verwendungsposition und in eine Aufbewahrungsposition ausgerollt bzw. eingerollt werden kann, **dadurch gekennzeichnet, dass** sie eine Sonnenblende (13) enthält, die aus einer Folge von filternden oder lichtundurchlässigen starren Leisten (10) gebildet ist, die an einer schmalen Fläche (2) ihrer longitudinalen Seiten aneinander anliegen, wobei jede schmale Fläche (2) eine sehr geringe Breite besitzt, wobei die Leisten (10) über flexible, jedoch nicht dehnbare Verbindungen (6) aneinander gehalten werden, die seitlich in Bezug auf die schmalen Flächen (2) angeordnet sind, welche somit Anschläge bilden, so dass die Schwenkung der Leisten (10) relativ zueinander auf der Seite, die sich gegenüber jener befindet, auf der sich die flexiblen Verbindungen (6) befinden, verhindert wird, so dass eine verhältnismäßig ebene Oberfläche gebildet wird.

2. Sonnenblendenvorrichtung nach Anspruch 1, **dadurch gekennzeichnet, dass** die Länge der flexiblen Verbindungen (6) gleich dem Abstand ist, der ihre Befestigungspunkte (7) trennt, damit sich dann, wenn auf die aus den Leisten (10) gebildete Sonnenblende (13) ihr eigenes Gewicht wirkt, die flexiblen Verbindungen (6) auf der Oberseite befinden, wobei die Gesamtheit der Leisten (10), die die Sonnenblende (13) bilden, im Wesentlichen eine starre Ebene bildet, die sich unter der Wirkung ihres Gewichts kaum krümmt.

3. Sonnenblendenvorrichtung nach Anspruch 1, **dadurch gekennzeichnet, dass** für jede Leiste (10) die zwei schmalen Flächen (2) an eine erste große Fläche (4) jeder der Leisten (10) angrenzen.

4. Sonnenblendenvorrichtung nach Anspruch 3, **dadurch gekennzeichnet, dass** die Leisten (10) eine Dicke besitzen, die größer ist als die Breite ihrer schmale Fläche (2), wobei jede Seite der Leiste (10) dann durch eine geneigte Fläche (3) vervollständigt ist, die jede schmale Fläche (2) mit einer zweiten Fläche (5) verbindet, die kleiner ist als die erste Fläche (4) jeder Leiste (10), derart, dass zwei benachbarte Leisten (10) untereinander eine V-förmige Aussparung (8) bilden, wobei die Befestigungspunkte (7) der flexiblen Verbindungen (6) an den geneigten Flächen (3) angeordnet sind.

5. Sonnenblendenvorrichtung nach Anspruch 1, **dadurch gekennzeichnet, dass** die Leisten (10) hohl und stranggepresst sind.

6. Sonnenblendenvorrichtung nach Anspruch 1, **dadurch gekennzeichnet, dass** sie eine Steuerklappe (15) enthält, die longitudinal und parallel zu den Leisten (10) verläuft.

7. Sonnenblendenvorrichtung nach Anspruch 6, **dadurch gekennzeichnet, dass** sie ein Untersetzungssystem enthält, das aus einem Hohlkranz (16) mit großem Durchmesser gebildet ist, der mit seiner Innenzahnung mit einem Wellenzahnrad (18) mit kleinerem Durchmesser in Eingriff ist, das mit einer Aufrollwelle (12) der Sonnenblende (13), um die die Sonnenblende (13) aufgerollt wird, fest verbunden ist.

8. Sonnenblendenvorrichtung nach Anspruch 7, **dadurch gekennzeichnet, dass** das Untersetzungssystem außerdem ein Zwischenzahnrad (17) enthält, das sowohl mit der Innenzahnung des Kranzes (16) als auch mit dem Wellenrad (18) in Eingriff ist.
